# EUROPÄISCHE PATENTANMELDUNG

(11) **EP 1 837 242 A1**
(43) Veröffentlichungstag der Anmeldung: **26.09.2007**
(21) Anmeldenummer: 06005714.8
(22) Anmeldetag: 21.03.2006
(51) Int. Cl.: B60R 15/00, A47K 11/00, B60P 3/22

(54) **Transportfahrzeug für Fäkalien**

(71) Anmelder: ADCO Umweltdienste Holding GmbH, 40880 Ratingen (DE)
(72) Erfinder: Steigerwald, Norbert, 63825 Schöllkrippen (DE); Böhme, Falk, 01809 Dohna (DE)
(74) Vertreter: Rohmann, Michael

(57) **Zusammenfassung**

Transportfahrzeug (1) für Fäkalien mit zumindest einem Aufnahmetank (2) für Fäkalien und mit zumindest einem an den Aufnahmetank angeschlossenen Vakuumtank (3,4), wobei zumindest eine Pumpe (7) zur Erzeugung eines Unterdruckes in dem Vakuumtank (3,4) vorgesehen ist. Der Vakuumtank (3,4) ist über zumindest eine Absaugleitung (8) an einen Fäkalienbehälter (17) anschließbar und Fäkalien sind unter Einwirkung des Unterdruckes aus dem Fäkalienbehälter in den Vakuumtank (3,4) absaugbar. Nach Füllung des Vakuumtanks (3,4) werden die Fäkalien über zumindest einer Einlassleitung (5) in den Aufnahmetank (2) eingelassen.

## Beschreibung

Die Erfindung betrifft ein Transportfahrzeug für Fäkalien. Die mit dem erfindungsgemäßen Transportfahrzeug abzutransportierenden Fäkalien stammen dabei insbesondere aus Toilettencontainern bzw. aus mobilen Toilettenkabinen, in denen die Fäkalien in einem entsprechenden Sammelbehälter aufgefangen werden. Der Begriff Fäkalien meint insbesondere eine Mischung von festen und flüssigen Bestandteilen.

Aus US 6 598 242 B1 ist ein Transportfahrzeug der eingangs genannten Art bekannt, das einen flachen quaderförmigen Aufnahmetank für die Fäkalien aufweist, wobei die Oberfläche dieses flachen Aufnahmetanks eine Ladefläche des Transportfahrzeuges bildet. Auf dieser Ladefläche können tragbare bzw. mobile Toilettenkabinen abgestellt und transportiert werden. Um die Fäkalien in den Aufnahmetank zu überführen wird in dem Aufnahmetank mit einer Pumpe ein Unterdruck erzeugt und aufgrund dieses Unterdruckes können die Fäkalien aus einem Sammelbehälter über einen Absaugschlauch in den Aufnahmetank abgesaugt werden. Der flache quaderförmige Tank dieses bekannten Transportfahrzeuges ist verhältnismäßig voluminös. Dementsprechend ist die Erzeugung eines Unterdruckes in diesem großen Aufnahmetank aufwändig und es wird insbesondere eine entsprechend ausgelegte Pumpe mit hoher Pumpenleistung benötigt. Deshalb ist die Erzeugung des Unterdruckes bei diesem bekannten Transportfahrzeug auch sehr energieaufwändig und damit kostenaufwändig. Dieses Transportfahrzeug weist aber noch einen weiteren Nachteil auf. Wenn in dem flachen quaderförmigen Tank ein Unterdruck erzeugt wird besteht die Gefahr, dass sich die Tankwände zum Tankinneren hin verformen bzw. dass entsprechende Ausbeulungen entstehen. Diese Gefahr besteht auch für die die Ladefläche bildende Decke des Aufnahmetanks und beim Auftreten solcher Verformungen wäre eine ebene Ladefläche nicht mehr gewährleistet und ein sicherer Transport der Toilettenkabinen wäre nicht mehr möglich. Dementsprechend sind für den Aufnahmetank des bekannten Transportfahrzeuges aufwändige Stützelemente und Verstärkungselemente erforderlich um solche Verformungen bzw. Ausbeulungen zu vermeiden. Auch diese Maßnahmen sind kostenaufwändig. Außerdem treten bei diesem bekannten Transportfahrzeug Zwänge auf, wenn der Aufnahmetank bereits teilweise mit Fäkalien gefüllt ist und dann erneut ein Unterdruck erzeugt werden soll, um Fäkalien aus einem weiteren Sammelbehälter abzusaugen.

Demgegenüber liegt der Erfindung das technische Problem zu Grunde, ein Transportfahrzeug der eingangs genannten Art anzugeben, bei dem die vorstehend aufgezeigten Nachteile vermieden werden können und mit dem eine einfache wenig aufwändige und funktionssichere Absaugung von Fäkalien möglich ist.

Zur Lösung dieses technischen Problems lehrt die Erfindung ein Transportfahrzeug für Fäkalien mit zumindest einem Aufnahmetank für Fäkalien und mit zumindest einem an den Aufnahmetank angeschlossenen Vakuumtank,
wobei fernerhin zumindest eine Pumpe vorgesehen ist, die zur Erzeugung eines Unterdruckes in dem Vakuumtank dient,
wobei der Vakuumtank über zumindest eine Absaugleitung an einen Fäkalienbehälter anschließbar ist, wobei Fäkalien unter Einwirkung des Unterdruckes aus dem Fäkalienbehälter in den Vakuumtank absaugbar sind
und wobei nach Füllung des Vakuumtanks die Fäkalien über zumindest eine Einlassleitung aus dem Vakuumtank in den Aufnahmetank eingelassen werden.

Der Fäkalienbehälter ist insbesondere ein entsprechender Sammelbehälter für Fäkalien an mobilen Toilettencontainern bzw, an mobilen Toilettenkabinen.

Grundsätzlich kann das erfindungsgemäße Transportfahrzeug aber auch an jeden anderen Fäkalienbehälter angeschlossen werden und die Fäkalien können dann in erfindungsgemäßer Weise abgesaugt werden. Prinzipiell eignet sich das erfindungsgemäße Transportfahrzeug auch zum Absaugen und zum Transport anderer flüssiger und/oder fester Medien.

Der Vakuumtank, in dem die Fäkalien zuerst aufgenommen werden ist über zumindest eine Einlassleitung mit dem Aufnahmetank verbunden, wobei die Einlassleitung zweckmäßigerweise ein Ventil aufweist. Es liegt im Rahmen der Erfindung, dass Vakuumtank, Pumpe, Aufnahmetank und Einlassleitung Bestandteil des Transportfahrzeuges sind. Vorzugsweise ist auch die Absaugleitung zur Absaugung der Fäkalien Bestandteil des Transportfahrzeuges. Diese Absaugleitung ist zweckmäßigerweise als Absaugschlauch ausgebildet. Der Absaugschlauch kann in einer Schlauchcassette aufgenommen werden, die bevorzugt hinter der Fahrerkabine des Transportfahrzeuges angeordnet ist. Diese Schlauchcassette ist zweckmäßigerweise so ausgelegt, dass sich der Absaugschlauch darin automatisch aufwickeln kann.

Es liegt im Rahmen der Erfindung, dass das Volumen des Vakuumtanks geringer ist als das Volumen des Aufnahmetanks. Insoweit liegt der Erfindung die Erkenntnis zu Grunde, dass es zweckmäßig ist den Unterdruck in einem kleineren Behälter bzw. in einem kleineren Tank zu erzeugen und die Fäkalien zunächst in diesen kleineren Tank zu saugen, um sie erst anschließend in den Aufnahmetank des Transportfahrzeuges zu überführen. - Die Erfindung lehrt, dass die Fäkalien nach Füllung des Vakuumtanks in den Aufnahmetank eingelassen werden. Füllung des Vakuumtanks meint dabei gemäß einer Ausführungsform die vollständige bzw. quasi vollständige Füllung des Vakuumtanks mit den Fäkalien. Nach einer anderen Ausführungsform meint Füllung aber auch eine teilweise Füllung des Vakuumbehälters mit Fäkalien.

Es gibt zwei bevorzugte erfindungsgemäße Funktionsvarianten für das Absaugen der Fäkalien. Bei der ersten Funktionsvariante steht der Vakuumtank bei der Unterdruckerzeugung lediglich in Saugverbindung mit der Pumpe und ist ansonsten geschlossen bezüglich der Absaugleitung und der Einlassleitung. In der Absaugleitung und in der Einlassleitung ist zweckmäßigerweise jeweils zumindest ein Ventil vorhanden. Wenn in dem Vakuumtank ein ausreichender Unterdruck erzeugt ist, wird die Verbindung des Vakuumtanks zu der Absaugleitung bzw. das Ventil der Absaugleitung geöffnet, so dass Fäkalien aus dem Fäkalienbehälter in den Vakuumtank abgesaugt werden. Bei diesem Absaugen der Fäkalien ist die Verbindung des Vakuumtanks zur Einlassleitung zweckmäßigerweise weiterhin geschlossen bzw. ist das entsprechende Ventil der Einlassleitung geschlossen. Nachdem die Fäkalien im Vakuumtank einen bestimmten Füllstand erreicht haben, werden dann die Fäkalien über die Einlassleitung in den Aufnahmetank eingelassen, indem das Ventil der Einlassleitung geöffnet wird.

Eine zweite bevorzugte Funktionsvariante unterscheidet sich von der vorstehend beschriebenen ersten Funktionsvariante dadurch, dass während der Erzeugung des Unterdruckes im Vakuumtank gleichzeitig bereits Fäkalien aus dem Fäkalienbehälter abgesaugt werden. Mit anderen Worten steht bei dieser Funktionsvariante der Vakuumtank beim Absaugen sowohl in Verbindung mit der im Betrieb befindlichen Pumpe als auch mit der an den Fäkalienbehälter angeschlossenen Absaugleitung. Lediglich die Einlassleitung zum Aufnahmetank ist bei dieser Unterdruckerzeugung bzw. bei diesem Absaugen der Fäkalien geschlossen. Ansonsten wird wie bei der ersten Funktionsvariante verfahren.

Es liegt im Rahmen der Erfindung, dass der zumindest eine Vakuumtank oberhalb des Aufnahmetanks angeordnet ist, so dass die im Vakuumtank aufgenommenen Fäkalien unter Einwirkung bzw. unter Miteinwirkung der Schwerkraft in den Aufnahmetank gelangen. Der Boden des Vakuumtanks befindet sich zweckmäßigerweise auf höherem Niveau als der Boden des Aufnahmetanks und vorzugsweise befindet sich der Boden des Vakuumtanks auf einem höheren Niveau als die Decke des Aufnahmetanks. Besonders bevorzugt ist dabei, dass sich der Vakuumtank unmittelbar vertikal über dem Aufnahmetank befindet. Es liegt im Rahmen der Erfindung, dass die in dem Vakuumtank aufgenommenen Fäkalien drucklos in den Aufnahmetank eingelassen werden. Zum Einlassen der Fäkalien in den Aufnahmetank ist vorzugsweise weder die Erzeugung eines Unterdruckes im Aufnahmetank erforderlich noch die Erzeugung eines Überdruckes im Vakuumtank. - Es versteht sich, dass der Aufnahmetank des Transportfahrzeuges zumindest eine Auslauföffnung aufweist, über die die Fäkalien dann der weiteren Behandlung zugeführt werden können. Zweckmäßigerweise ist an den Aufnahmetank ein Auslaufstutzen angeschlossen, wobei dieser Auslaufstutzen vorzugsweise an der Unterseite des Transportfahrzeuges angeordnet ist.

Nach sehr bevorzugter Ausführungsform, der im Rahmen der Erfindung ganz besondere Bedeutung zukommt, ist eine Steuer- und/oder Regeleinrichtung vorgesehen, die die Unterdruckerzeugung mit der Pumpe, das Absaugen der Fäkalien und das Einlassen der Fäkalien in den Aufnahmetank automatisch steuert bzw. regelt. Es liegt im Rahmen der Erfindung, dass diese Steuer- und/oder Regeleinrichtung Bestandteil des erfindungsgemäßen Transportfahrzeuges ist. Die Steuer- und/oder Regeleinrichtung weist bevorzugt zumindest einen Mikroprozessor auf, der entsprechend der erfindungsgemäßen Funktionsweise programmiert ist bzw. programmierbar ist. Zweckmäßigerweise ist eine Messeinrichtung für den Druck bzw. Unterdruck in dem Vakuumtank vorgesehen und/oder eine Messeinrichtung für den Füllstand des Vakuumtanks. Es liegt dabei im Rahmen der Erfindung, dass die Messeinrichtungen für den Unterdruck und/oder für den Füllstand an die Steuer- und/oder Regeleinrichtung angeschlossen sind, wobei die Steuer- und/oder Regeleinrichtung vorzugsweise in Abhängigkeit der gemessenen Messwerte arbeitet.

Nach einer Ausführungsform der Erfindung ist lediglich ein einziger Vakuumtank vorgesehen und das Volumen dieses einzigen Vakuumtanks ist geringer als das Volumen des Aufnahmetanks. Der Vakuumtank ist zweckmäßigerweise bezüglich der Fahrtrichtung des Transportfahrzeuges im vorderen Bereich des Transportfahrzeuges angeordnet und zwar bevorzugt hinter der Fahrerkabine. Das Volumen des Vakuumtanks ist vorzugsweise wesentlich geringer als das Volumen des Aufnahmetanks und zwar beträgt das Volumen des Vakuumtanks bevorzugt weniger als die Hälfte, sehr bevorzugt weniger als ein Drittel und besonders bevorzugt weniger als ein Viertel des Volumens des Aufnahmetanks. Der Erfindung liegt insoweit die Erkenntnis zu Grunde, dass in einem kleinen Vakuumtank in relativ kurzer Zeit ein Unterdruck erzeugt werden kann. Außerdem ist hierzu lediglich eine verhältnismäßig kleine Pumpe bzw. eine Pumpe mit relativ geringer Pumpenleistung erforderlich.

Gemäß einer weiteren Ausführungsform der Erfindung sind zwei Vakuumtanks vorgesehen, die alternierend betrieben werden. Nach einer bevorzugten Ausführungsvariante ist dabei lediglich eine Pumpe vorgesehen, die mit beiden Vakuumtanks verbunden ist und mit der sowohl in dem ersten als auch in dem zweiten Vakuumtank ein Unterdruck erzeugt werden kann. Es liegt im Rahmen der Erfindung, dass das Volumen jedes der beiden Vakuumtanks kleiner und insbesondere wesentlich kleiner ist als das Volumen des Aufnahmetanks. Vorzugsweise ist das Volumen jedes der beiden Vakuumtanks geringer als die Hälfte, bevorzugt geringer als ein Drittel und sehr bevorzugt geringer als ein Viertel des Volumens des Aufnahmetanks. Zweckmäßigerweise haben die beiden Vakuumtanks das gleiche Volumen bzw. in etwa das gleiche Volumen.

Der alternierende Betrieb der beiden Vakuumtanks wird nachfolgend erläutert, wobei für jeden Vakuumtank die beiden oben erläuterten Funktionsvarianten bezüglich des Absaugens möglich sind. Zunächst wird in dem ersten Vakuumtank ein Unterdruck erzeugt und die Fäkalien aus einem Fäkalienbehälter werden in den ersten Vakuumtank abgesaugt. Wenn ein bestimmter Füllstand an Fäkalien in dem ersten Vakuumtank erreicht ist, wird die Pumpe in Saugverbindung mit dem zweiten Vakuumtank gebracht und es wird ein Unterdruck in dem zweiten Vakuumtank erzeugt. Fäkalien werden dann aus dem Fäkalienbehälter in den zweiten Vakuumtank abgesaugt. Die Fäkalien aus dem ersten Vakuumtank werden währenddessen über die Einlassleitung in den Aufnahmetank eingelassen. Wenn der zweite Vakuumtank einen bestimmten Füllstand an Fäkalien erreicht hat wird die Pumpe in Saugverbindung mit dem ersten Vakuumtank gebracht und dann wird dort erneut ein Unterdruck erzeugt und so weiter fort.

Nach besonders bevorzugter Ausführungsform der Erfindung ist der Vakuumtank bzw. sind die Vakuumtanks zylinderförmig ausgebildet. Zweckmäßigerweise ist dabei der zumindest eine Vakuumtank als stehender Zylinder auf dem Transportfahrzeug angeordnet, d. h. mit vertikaler Zylinderachse. Vorzugsweise ist der Boden bzw. Bodenbereich eines zylinderförmigen Vakuumtanks nach außen gewölbt. Diese Ausbildung des Bodens erleichtert das Auslaufen der Fäkalien in den Aufnahmetank. Auch die Decke bzw, der Deckenbereich des Vakuumtanks kann nach außen gewölbt ausgebildet sein.

Gemäß bevorzugter Ausführungsvariante der Erfindung weist der zumindest eine Vakuumtank eine Tankwandung aus Kunststoff auf, wobei diese Tankwandung aus Kunststoff zweckmäßigerweise bewehrt ist. Dabei liegt es im Rahmen der Erfindung, dass die Seitenwände, der Boden und die Decke des Vakuumtanks aus Kunststoff bestehen und vorzugsweise bewehrt sind. Die bewehrten Vakuumtankwandungen bestehen bei einer Ausführungsform aus faserverstärktem Kunststoff, insbesondere aus glasfaserverstärktem Kunststoff. Es liegt auch im Rahmen der Erfindung Bewehrungsausformungen in den Wandungen des Vakuumtanks vorzusehen. Nach einer bevorzugten Ausführungsvariante weist die Wandung des Vakuumtanks zumindest bereichsweise Versteifungssicken auf. Die vorgenannten Bewehrungsmaßnahmen können mit relativ geringem Aufwand verwirklicht werden und nichtsdestoweniger kann in dem erfindungsgemäßen Vakuumtank ein relativ hoher Unterdruck erzeugt werden, ohne dass die Wandungen des Vakuumtanks beeinträchtigt werden. Nach einer Ausführungsform besteht die Wandung eines Vakuumtanks aus einem Polyolefin, vorzugsweise aus Polyethylen, wobei die Wandung zweckmäßigerweise Bewehrungsausformungen, bevorzugt in Form von Versteifungssicken, aufweist.

Es liegt im Rahmen der Erfindung, dass die Oberfläche des Aufnahmetanks zumindest einen Teil der Ladefläche des Transportfahrzeuges bildet. Dabei kann die Decke des Aufnahmetanks unmittelbar die genannte Ladefläche bilden. Gemäß bevorzugter Ausführungsform der Erfindung ist aber ein weiteres Flächenelement auf die Decke des Aufnahmetanks, gegebenenfalls unter Zwischenschaltung von Zwischenelementen aufgebracht und bildet die Ladefläche.

Es liegt fernerhin im Rahmen der Erfindung, dass der Aufnahmetank Bestandteil eines Tankaggregates ist, wobei das Tankaggregat außer dem Aufnahmetank zumindest einen Frischwassertank aufweist und wobei die Oberfläche dieses Tankaggregates zumindest einen Teil der Ladefläche des Transportfahrzeuges bildet. Frischwasser meint im Rahmen der Erfindung sauberes Wasser, das insbesondere zum Händereinigen verwendet wird bzw. Trinkwasser. Nach einer Ausführungsvariante kann das Frischwasser mit Zusätzen, beispielsweise mit Desinfektionsmittel vorgemischt sein.

Eine bevorzugte Ausführungsform ist dadurch gekennzeichnet, dass das Tankaggregat einen mittigen Aufnahmetank sowie an zwei gegenüberliegenden Seiten des mittigen Aufnahmetanks jeweils zumindest einen Frischwassertank aufweist. Aufnahmetank und Frischwassertanks schließen dabei zweckmäßigerweise unmittelbar aneinander an. Die Tankwände zwischen Frischwassertanks und Aufnahmetank übernehmen dabei auch die Funktion von Stützelementen für das Tankaggregat bzw. für die Oberfläche des Tankaggregates. Gemäß einer Ausführungsvariante der Erfindung ist der Aufnahmetank mit den Frischwassertanks verbindbar, beispielsweise über Ventile bzw. Kugelhähne oder dergleichen. Grundsätzlich könnten also auch die Frischwassertanks für die Aufnahme von Fäkalien eingesetzt werden oder der Aufnahmetank könnte zur Aufnahme von Frischwasser verwendet werden. Es liegt im Rahmen der Erfindung, dass sowohl der Aufnahmetank als auch die Frischwassertanks als quaderförmige Tanks mit rechteckigem Querschnitt ausgebildet sind. Die Tanks können dabei auch aus Kunststoff, beispielsweise aus Polyethylen bzw. aus einem glasfaserverstärkten Kunststoff bestehen.

Nach besonders bevorzugter Ausführungsform, der im Rahmen der Erfindung besondere Bedeutung zukommt, sind auf zumindest einem Teil der Ladefläche des erfindungsgemäßen Transportfahrzeuges Toilettenkabinen aufnehmbar. Zweckmäßigerweise steht die gesamte Ladefläche, die bevorzugt zumindest teilweise von der Oberfläche des Tankaggregates gebildet wird für die Aufnahme von Toilettenkabinen zur Verfügung. Vorzugsweise befindet sich hinten an der Ladefläche eine Hebebühne, mit der die Toilettenkabinen anhebbar bzw. auf das Niveau der Ladefläche anhebbar sind.

Der Erfindung liegt die Erkenntnis zu Grunde, dass mit einem erfindungsgemäßen Transportfahrzeug ein einfaches, wenig aufwändiges und funktionssicheres Absaugen von Fäkalien möglich ist. Durch die erfindungsgemäße Zwischenschaltung zumindest eines entsprechend ausgelegten Vakuumtanks ist eine Unterdruckerzeugung in dem gesamten Aufnahmetank des Transportfahrzeuges nicht mehr erforderlich. Dadurch entfallen auch die aus dem Stand der Technik bekannten Nachteile bei dieser Unterdruckerzeugung. So können störende bzw. nachteilhafte Verformungen der Aufnahmetankwandungen vermieden werden oder es können aufwändige Stützkonstruktionen entfallen, die diesen Verformungen entgegenwirken sollen. Bei der Unterdruckerzeugung in einem kleineren Vakuumtank ist im Vergleich zu dem aus dem Stand der Technik bekannten Transportfahrzeug eine kleinere Pumpe bzw. eine Pumpe mit geringerer Pumpleistung erforderlich und somit wird mit der erfindungsgemäßen Lehre auch eine beachtliche Energieeinsparung und folglich eine erhebliche Kosteneinsparung erreicht. Im Übrigen entfallen bei dem erfindungsgemäßen Transportfahrzeug auch die eingangs genannten Zwänge, die bei dem bekannten Transportfahrzeug auftreten, wenn dessen Aufnahmetank bereits teilweise mit Fäkalien gefüllt ist und dann erneut Unterdruck im Aufnahmetank erzeugt werden soll. Als Folge der erfindungsgemäßen Maßnahmen stellt die Oberfläche des Aufnahmetanks bzw. die Oberfläche des Tankaggregates eine stets ebene Ladefläche zur Verfügung, die auch langfristig von Verformungen bzw. Verbiegungen frei bleibt. Somit ist stets ein sicherer Transport von Toilettenkabinen auf der Ladefläche gewährleistet.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht eines erfindungsgemäßen Transportfahrzeuges,
- Fig. 2: einen Schnitt durch den Gegenstand nach Fig. 1 in einer ersten Ausführungsform,
- Fig. 3: den Schnitt durch den Gegenstand nach Fig. 1 in einer zweiten Ausführungsform,
- Fig. 4: eine perspektivische Ansicht des erfindungsgemäßen Transportfahrzeuges in der Ausführungsform gemäß Fig. 3 und
- Fig. 5: einen Schnitt durch den Gegenstand aus Fig. 1.

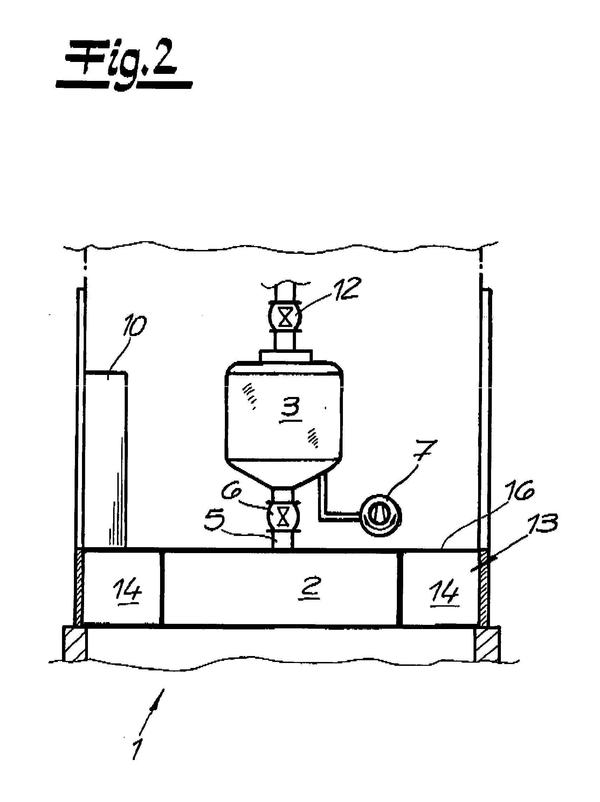

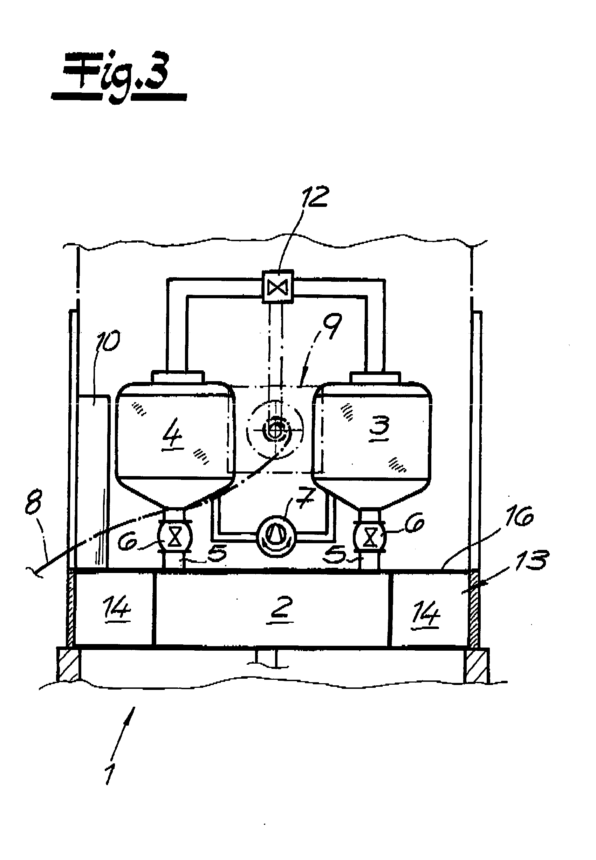

Die Figuren zeigen ein erfindungsgemäßes Transportfahrzeug 1, das vorzugsweise und im Ausführungsbeispiel für den Transport von Fäkalien, von Frischwasser und von Toilettenkabinen 17 oder dergleichen geeignet ist. Das Transportfahrzeug weist im Ausführungsbeispiel einen Aufnahmetank 2 für die Fäkalien auf und an diesen Aufnahmetank 2 ist zumindest ein Vakuumtank 3, 4 angeschlossen. Bei der Ausführungsvariante nach Fig. 2 ist lediglich ein einziger Vakuumtank 3 vorgesehen, während bei der Ausführungsvariante gemäß Fig. 3 zwei Vakuumtanks 3, 4 vorhanden sind. Die Vakuumtanks 3, 4 sind jeweils über eine Einlassleitung 5 mit dem Aufnahmetank 2 verbunden, wobei sich in einer Einlassleitung 5 ein Einlassventil 6 befindet, das geöffnet wird, wenn Fäkalien aus dem Vakuumtank 3, 4 in den Aufnahmetank 2 eingelassen werden sollen. Zweckmäßigerweise und im Ausführungsbeispiel sind die Vakuumtanks 3, 4 unmittelbar vertikal über dem Aufnahmetank 2 angeordnet, so dass im Vakuumtank 3, 4 aufgenommene Fäkalien unter Einwirkung der Schwerkraft über die Einlassleitung 5 in den Aufnahmetank 2 gelangen.

Weiterhin ist eine Pumpe 7 zur Erzeugung eines Unterdruckes in dem Vakuumtank 3 bzw. in den Vakuumtanks 3, 4 vorgesehen. Im Ausführungsbeispiel nach Fig. 3 ist eine einzige Pumpe 7 beiden Vakuumtanks 3, 4 zugeordnet. Mit dieser Pumpe 7 kann also ein Unterdruck sowohl in dem ersten Vakuumtank 3 als auch in den zweiten Vakuumtank 4 erzeugt werden.

Im Ausführungsbeispiel ist ein Vakuumtank 3, 4 über eine als Absaugschlauch 8 ausgebildete Absaugleitung an einen nicht dargestellten Fäkalienbehälter angeschlossen. Der Fäkalienbehälter kann ein Sammelbehälter eines Toilettencontainers oder einer Toilettenkabine sein. Im Ausführungsbeispiel nach Fig. 3 stehen beide Vakuumtanks 3, 4 mit einem Absaugschlauch 8 in Verbindung. Die Fäkalien sind unter Einwirkung des mit der Pumpe 7 in einem Vakuumtank 3, 4 erzeugten Unterdruckes aus dem Fäkalienbehälter in den Vakuumtank 3, 4 absaugbar. Der Absaugschlauch 8 ist im Übrigen vorzugsweise und im Ausführungsbeispiel in einer Schlauchcassette 9 aufgenommen, in der er sich automatisch aufwickeln kann.

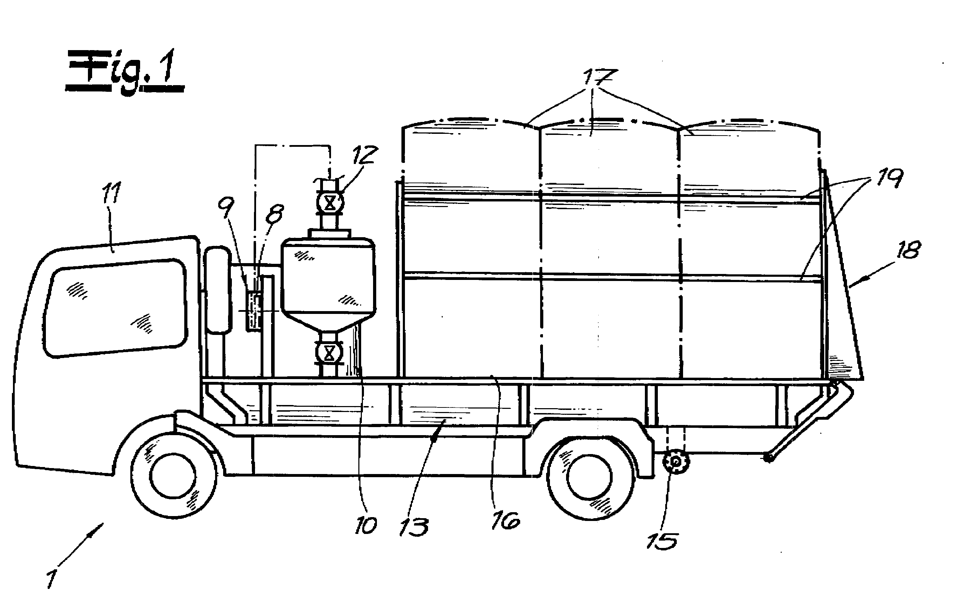

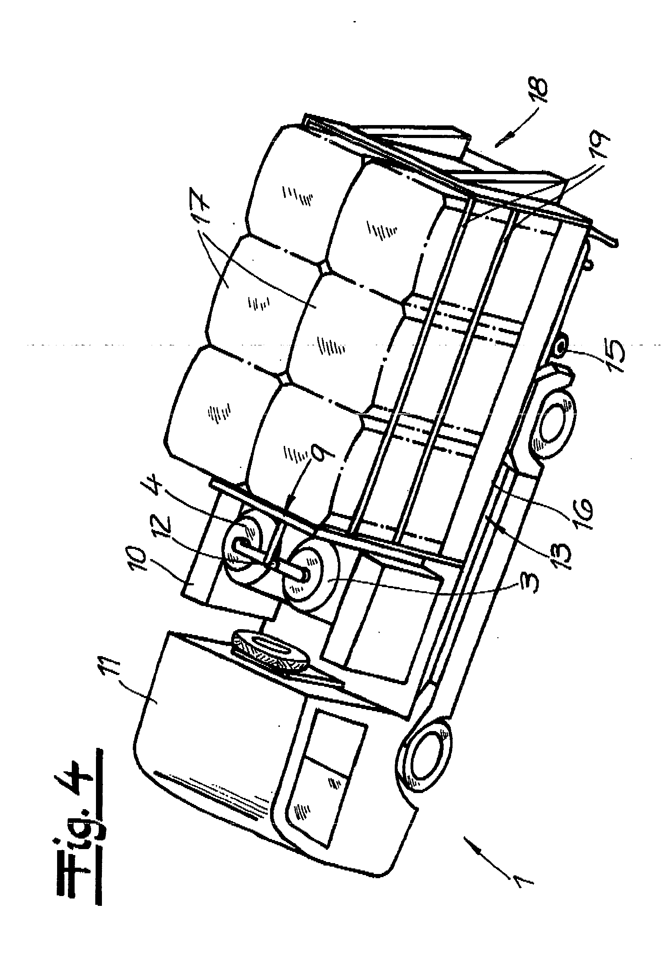

Wenn ein Vakuumtank 3, 4 einen bestimmten Füllstand erreicht hat, wird das Einlassventil 6 der zugeordneten Einlassleitung 5 geöffnet und die Fäkalien werden dann über die Einlassleitung 5 in den Aufnahmetank 2 eingelassen. Zweckmäßigerweise und im Ausführungsbeispiel ist eine Steuer- und/oder Regeleinrichtung 10 vorgesehen, mit der die Unterdruckerzeugung mittels der Pumpe 7, das Absaugen der Fäkalien in den Vakuumtank 3, 4 und das Einlassen der Fäkalien in den Aufnahmetank 2 automatisch gesteuert bzw. geregelt wird. In den Fig. 1 und 4 ist erkennbar, dass diese Steuer- und/oder Regeleinrichtung 10 vorzugsweise im vorderen Bereich des Transportfahrzeuges 1 hinter der Fahrerkabine 11 angeordnet ist. Es liegt im Rahmen der Erfindung, dass nicht dargestellte Messeinrichtungen für den Unterdruck im Vakuumtank 3, 4 und für den Füllstand im Vakuumtank 3, 4 vorgesehen sind, die mit der Steuer- und/oder Regeleinrichtung 10 zusammenarbeiten bzw. wechselwirken.

Im Ausführungsbeispiel nach Fig. 2 ist lediglich ein einziger Vakuumtank 3 vorgesehen, dessen Volumen geringer bzw. wesentlich geringer ist als das Volumen des Aufnahmetanks 2. In den Fig. 1 und 4 ist erkennbar, dass der Vakuumtank 3, 4 bzw. dass die Vakuumtanks 3, 4 zweckmäßigerweise im vorderen Bereich des Transportfahrzeuges 1 hinter der Fahrerkabine 11 angeordnet sind. Die Funktionsweise des Transportfahrzeuges 1 mit dem einzigen Vakuumtank 3 wird nachfolgend erläutert, wobei die Steuer- und/oder Regeleinrichtung 10 die erläuterten Funktionsschritte automatisch steuert bzw. regelt. Zunächst wird mit der Pumpe 7 ein Unterdruck in dem Vakuumtank 3 erzeugt. Dabei kann zunächst lediglich der Unterdruck in dem Vakuumtank 3 bei geschlossenem Einlassventil 6 und auch bei geschlossenem Absaugventil 12 erzeugt werden und bei einem bestimmten erreichten Unterdruck kann dann das Absaugventil 12 zum Absaugen der Fäkalien und zur Füllung des Vakuumtanks 3 mit den Fäkalien geöffnet werden. Es ist aber auch möglich den Unterdruck mit der Pumpe 7 zu erzeugen und gleichzeitig bei geöffnetem Absaugventil 12 die Fäkalien in den Vakuumtank 3 zu saugen. Wenn der Vakuumtank 3 einen bestimmten Füllstand erreicht hat wird das Einlassventil 6 der Einlassleitung 5 geöffnet und die Fäkalien können drucklos in den Aufnahmetank 2 eingelassen werden. Bei dem Einlassventil 6 handelt es sich im Übrigen vorzugsweise um ein Pneumatikventil. Auch das Absaugventil 12 ist nach bevorzugter Ausführungsform als Pneumatikventil ausgebildet.

In den Fig. 3 und 4 ist das Ausführungsbeispiel des erfindungsgemäßen Transportfahrzeuges 1 dargestellt, das mit zwei Vakuumtanks 3, 4 arbeitet, die alternierend betrieben werden. Wie oben bereits dargelegt ist für beide Vakuumtanks 3, 4 lediglich eine Pumpe 7 vorgesehen (Fig. 3). Im Ausführungsbeispiel ist das Volumen der beiden Vakuumtanks 3, 4 jeweils kleiner bzw. wesentlich kleiner als das Volumen des Aufnahmetanks 2. Nachfolgend wird die Funktionsweise dieser Ausführungsform erläutert, wobei auch hier vorzugsweise die Steuer- und/oder Regeleinrichtung 10 die einzelnen Funktionsschritte automatisch steuert bzw. regelt. Auch hier sind zweckmäßigerweise nicht dargestellte Messeinrichtungen für den Unterdruck in den Vakuumtanks 3, 4 und für den Füllstand in den Vakuumtanks 3, 4 vorgesehen, die zweckmäßigerweise mit der Steuer- und/oder Regeleinrichtung 10 zusammenarbeiten bzw. wechselwirken. Zunächst wird mit der Pumpe 7 im ersten Vakuumtank 3 ein Unterdruck erzeugt. Hier sind wiederum die beiden Funktionsvarianten mit geschlossenem Absaugventil 12 oder geöffnetem Absaugventil 12 möglich. Wenn im ersten Vakuumtank 3 ein bestimmter Füllstand erreicht ist, beispielsweise wenn der Vakuumtank 3 zur Hälfte oder zu Dreiviertel gefüllt ist, wird mit der Pumpe 7 vorzugsweise bereits ein Unterdruck in dem zweiten Vakuumtank 4 erzeugt. Bei entsprechendem Füllstand im Vakuumtank 3 wird dann das Einlassventil 6 der Einlassleitung 5 geöffnet und die Fäkalien werden aus dem Vakuumtank 3 in den Aufnahmetank 2 eingelassen. Auch bei der Unterdruckerzeugung im zweiten Vakuumtank 4 sind beide Funktionvarianten mit geschlossenem Absaugventil 12 und geöffnetem Absaugventil 12 möglich. Wenn ein bestimmter Füllstand des Vakuumtanks 4 erreicht ist wird vorzugsweise bereits mit der Unterdruckerzeugung im ersten Vakuumtank 3 begonnen. Bei entsprechendem Füllstand im Vakuumtank 4 wird das Einlassventil 6 der dem Vakuumtank 4 zugeordneten Einlassleitung 5 geöffnet und die Fäkalien werden aus dem zweiten Vakuumtank 4 in den Aufnahmetank 2 eingelassen und so weiter fort.

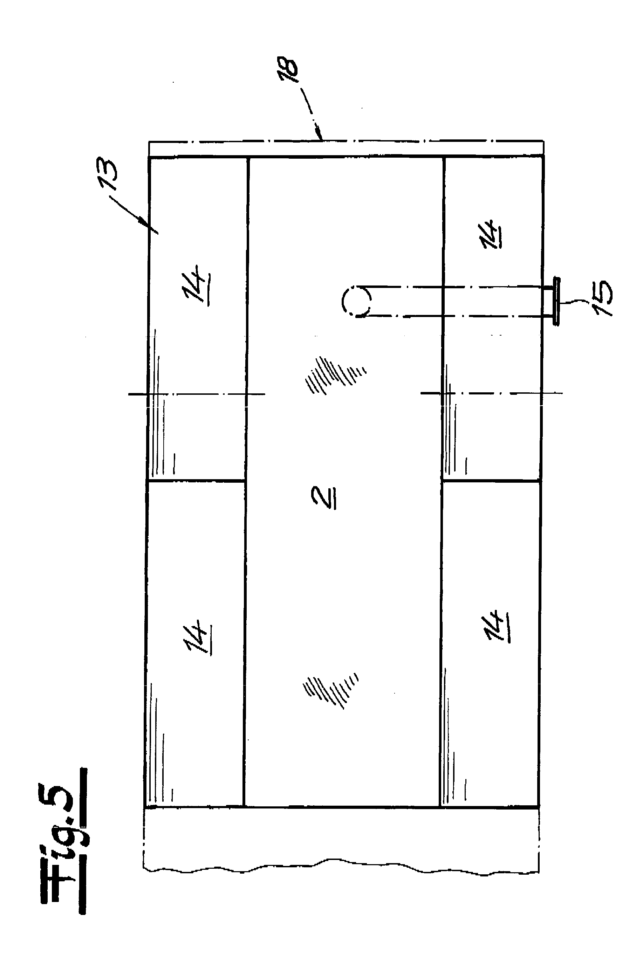

Vorzugsweise und im Ausführungsbeispiel sind die Vakuumtanks 3, 4 zylinderförmig ausgebildet. Zweckmäßigerweise sind die Vakuumtanks 3, 4 als stehende Zylinder mit vertikaler Zylinderachse auf dem Transportfahrzeug 1 angeordnet. Nach bevorzugter Ausführungsform und im Ausführungsbeispiel ist der Boden der Vakuumtanks 3, 4 nach außen bzw. nach unten gewölbt, was unter anderem ein Auslaufen der Fäkalien in die Einlassleitung 5 erleichtert. Im Ausführungsbeispiel ist auch die Decke der Vakuumtanks 3, 4 leicht nach außen gewölbt. Nach besonders bevorzugter Ausführungsform bestehen die Vakuumtanks 3, 4 aus Kunststoff und die Tankwandung aus Kunststoff ist zweckmäßigerweise bewehrt. Dabei kann der Kunststoff gemäß einer Ausführungsvariante faserbewehrt bzw. glasfaserbewehrt sein. Nach einer anderen Ausführungsform weist die Tankwandung der Vakuumtanks 3, 4 nicht dargestellte Bewehrungsausformungen, insbesondere Versteifungssicken auf. In der Fig. 5 ist erkennbar, dass der Aufnahmetank 2 für die Fäkalien Bestandteil eines Tankaggregates 13 ist, wobei dieses Tankaggregat den mittigen Aufnahmetank 2 sowie an zwei gegenüberliegenden Seiten dieses mittigen Aufnahmetanks 2 jeweils vier Frischwassertanks 14 aufweist. Es sind also insgesamt fünf Tanks vorgesehen, wobei der Aufnahmetank 2 vorzugsweise das größte Volumen einnimmt. Der Aufnahmetank 2 kann mit den Frischwassertanks 14 sowie die Frischwassertanks 14 untereinander verbunden werden, insbesondere über entsprechende Ventile. An der Unterseite des Transportfahrzeuges 1 ist im Übrigen ein an den Aufnahmetank 2 angeschlossener Auslaufstutzen 15 vorgesehen, über den die Fäkalien aus dem Aufnahmetank 2 abgelassen und ihrer weiteren Behandlung zugeführt werden können. Es versteht sich, dass auch an den Frischwassertanks 14 nicht dargestellte Einlässe und/oder Auslässe vorhanden sind. Sowohl der Aufnahmetank 2 als auch die Frischwassertanks 14 sind im Ausführungsbeispiel quaderförmige Tanks mit rechteckigem Querschnitt.

Nach besonders bevorzugter Ausführungsform der Erfindung bildet die Oberfläche des Tankaggregates 13 aus dem Aufnahmetank 2 und den Frischwassertanks 14 eine Ladefläche 16 des Transportfahrzeuges 1. In den Fig. 1 und 4 wurde dargestellt, dass auf dieser Ladefläche 16 vorzugsweise Toilettenkabinen 17 aufgenommen und transportiert werden. Im Ausführungsbeispiel sind insgesamt sechs Toilettenkabinen 17 auf der Ladefläche 16 aufgenommen. Im hinteren Bereich der Ladefläche 16 ist im Übrigen eine Hebebühne 18 vorgesehen, mit der die Toilettenkabinen 17 in an sich bekannter Weise auf das Niveau der Ladefläche 16 angehoben werden können, In den Fig. 1 und 4 ist auch angedeutet worden, dass das Transportfahrzeug 1 Stützelemente 19 zum seitlichen Abstützen der Toilettenkabinen 17 aufweisen kann.

## Patentansprüche

1. Transportfahrzeug (1) für Fäkalien mit zumindest einem Aufnahmetank (2) für Fäkalien und mit zumindest einem an den Aufnahmetank (2) angeschlossenen Vakuumtank (3, 4),
wobei fernerhin zumindest eine Pumpe (7) zur Erzeugung eines Unterdruckes in dem Vakuumtank (3, 4) vorgesehen ist,
wobei der Vakuumtank (3, 4) über zumindest eine Absaugleitung an einen Fäkalienbehälter anschließbar ist, wobei Fäkalien unter Einwirkung des Unterdruckes aus dem Fäkalienbehälter in den Vakuumtank (3, 4) absaugbar sind
und wobei nach Füllung des Vakuumtanks (3, 4) die Fäkalien über zumindest einer Einlassleitung (6) in den Aufnahmetank (2) eingelassen werden.

2. Transportfahrzeug nach Anspruch 1, wobei der Vakuumtank (3, 4) oberhalb des Aufnahmetanks (2) angeordnet ist, so dass die im Vakuumtank (3, 4) aufgenommenen Fäkalien unter Einwirkung der Schwerkraft in den Aufnahmetank (2) eingelassen werden.

3. Transportfahrzeug nach einem der Ansprüche 1 oder 2, wobei eine Steuer- und/oder Regeleinrichtung (10) vorgesehen ist, die die Unterdruckerzeugung mit der Pumpe (7) und/oder das Absaugen der Fäkalien und/oder das Einlassen der Fäkalien in den Aufnahmetank (2) steuert und/oder regelt.

4. Transportfahrzeug nach einem der Ansprüche 1 bis 3, wobei lediglich ein Vakuumtank (3, 4) vorgesehen ist und wobei das Volumen dieses einzigen Vakuumtanks (3, 4) geringer ist als das Volumen des Aufnahmetanks (2).

5. Transportfahrzeug nach einem der Ansprüche 1 bis 3, wobei zumindest zwei Vakuumtanks (3, 4) vorgesehen sind, die alternierend betrieben werden.

6. Transportfahrzeug nach einem der Ansprüche 1 bis 5, wobei ein Vakuumtank (3, 4) zylinderförmig ausgebildet ist.

7. Transportfahrzeug nach einem der Ansprüche 1 bis 6, wobei ein Vakuumtank (3, 4) eine Tankwandung aus Kunststoff aufweist und wobei diese Tankwandung aus Kunststoff bewehrt ist.

8. Transportfahrzeug nach einem der Ansprüche 1 bis 7, wobei die Oberfläche des Aufnahmetanks (2) zumindest einen Teil der Ladefläche (16) des Transportfahrzeuges (1) bildet.

9. Transportfahrzeug nach einem der Ansprüche 1 bis 8, wobei der Aufnahmetank (2) Bestandteil eines Tankaggregates (13) ist, wobei das Tankaggregat (13) zumindest einen Frischwassertank (14) aufweist und wobei die Oberfläche dieses Tankaggregates (13) zumindest einen Teil der Ladefläche (16) des Transportfahrzeuges (1) bildet.

10. Transportfahrzeug nach Anspruch 9, wobei das Tankaggregat (13) einen mittigen Aufnahmetank (2) sowie an zwei gegenüberliegenden Seiten des mittigen Aufnahmetanks (2) jeweils zumindest einen Frischwassertank (14) aufweist.

11. Transportfahrzeug nach einem der Ansprüche 8 bis 10, wobei auf zumindest einem Teil der Ladefläche (16) Toilettenkabinen (17) aufnehmbar sind.
